# EUROPÄISCHE PATENTSCHRIFT

(11) **EP 3 371 040 B1**
(45) Veröffentlichungstag und Bekanntmachung des Hinweises auf die Patenterteilung: **03.06.2020**
(21) Anmeldenummer: 16763497.1
(22) Anmeldetag: 06.09.2016
(51) Int. Cl.: B62K 19/00, B62J 17/00

(54) **VERKLEIDUNGSANORDNUNG FÜR EIN KRAFTFAHRZEUG**
CLADDING ASSEMBLY FOR A MOTOR VEHICLE
SYSTÈME DE CARÉNAGE POUR VÉHICULE À MOTEUR

(30) Priorität: 05.11.2015 DE 102015221678
(43) Veröffentlichungstag der Anmeldung: 12.09.2018
(73) Patentinhaber: Bayerische Motoren Werke Aktiengesellschaft, 80809 München (DE)
(72) Erfinder: WEBER, Marc, 80939 München (DE)
(86) Internationale Anmeldenummer: PCT/EP2016/070927
(87) Internationale Veröffentlichungsnummer: WO 2017/076534

(56) Entgegenhaltungen:
- EP-A1- 2 336 012
- CN-A- 101 007 552
- CN-U- 201 842 179
- JP-A- H09 104 380
- JP-A- 2002 068 045

## Beschreibung

Die Erfindung betrifft eine Verkleidungsanordnung für ein Kraftfahrzeug, insbesondere ein Motorrad oder ein motorradähnliches Kraftfahrzeug, mit mindestens zwei flächigen Verkleidungselementen gemäß dem Oberbegriff des Patentanspruchs 1.

Im Fahrzeugbau stellt die Befestigung von Verkleidungsteilen an dem Fahrzeug eine besondere Herausforderung dar. Zwischen zwei benachbarten Verkleidungsteilen ist üblicherweise eine Fuge vorgesehen, deren Breite als Spaltmaß bezeichnet wird und ein wichtiger Faktor für konstruktive Aspekte aber auch die Aerodynamik des Fahrzeugs ist. Gleichmäßige und möglichst geringe Spaltmaße sind aufgrund von auftretenden Toleranzen besonders in einer Serienfertigung schwierig zu erzielen und gelten als besonderes Kennzeichen von qualitativ hochwertigen Fahrzeugen, da hierzu eine aufwendige Abstimmung der benachbarten Bauteile erzielt und möglichst geringe Toleranzen reproduzierbar erfüllt werden müssen.

Im Falle von zu gering gewählten Fugenmaßen besteht die Gefahr, dass die Verkleidungsteile nicht montiert werden können oder miteinander in Reibkontakt treten, wodurch Spannungen in den Verkleidungsteilen sowie eine störende Geräuschentwicklung zu beobachten ist. Generell können bereits kleinste Unterschiede in Parallelität und Fugenmaß zu unerwünschten aerodynamischen und aeroakustischen Erscheinungen führen und darüber hinaus bei Betrachtung senkrecht zur Bauteiloberfläche leicht mit bloßem Auge erkannt werden.

Verschiedene Ausführungen von Verkleidungsanordnungen sind beispielsweise aus der CN 1010007552 A, CN 201 842 179 U, EP 2 336 012 A1, JP H09 104380 A und der JP 2002 068045 A bekannt. Dokument CN 101 007 552 A offenbart den Oberbegriff des Anspruchs 1.

Aufgabe der Erfindung ist es daher eine Fahrzeugverkleidung mit einer entsprechenden Fuge bereitzustellen, welche die genannten Nachteile überwindet und eine möglichst einfache und reproduzierbare Montage erlaubt.

Diese Aufgabe wird gelöst mit einer Verkleidungsanordnung mit den Merkmalen des Patentanspruchs 1. Vorteilhafte Ausführungsformen ergeben sich aus den hiervon abhängigen Patentansprüchen.

Demnach wird eine Verkleidungsanordnung für ein Kraftfahrzeug, insbesondere für ein Motorrad oder ein motorradähnliches Kraftfahrzeug, mit mindestens zwei flächigen Verkleidungselementen bereitgestellt, wobei ein erstes Verkleidungselement eine erste Außenfläche und ein zweites Verkleidungselement eine zweite Außenfläche aufweisen, welche im verbauten Zustand zumindest einen Teil einer äußeren Verkleidung des Kraftfahrzeuges bilden und nebeneinander angeordnet sowie durch eine Fuge voneinander getrennt sind. Des Weiteren weist das erste Verkleidungselement einen Übergangsabschnitt auf, der um einen ersten Winkel abgewinkelt zu der ersten Außenfläche ausgebildet und zumindest mit einem ersten Ende unter das zweite Verkleidungselement erstreckt ist, wobei das zweite Verkleidungselement an einem dem Übergangsabschnitt zugewandten zweiten Ende eine Fase aufweist, die parallel zu dem Übergangsabschnitt ausgebildet ist.

Zwischen zwei benachbart zueinander angeordneten Verkleidungselementen des Kraftfahrzeugs ist also im Bereich der auf diese Weise gebildeten Fuge an einem der beiden Verkleidungselemente der Übergangsabschnitt ausgebildet. Dieser erstreckt sich zumindest im Bereich seines äußeren Endes, also dem von der ersten Außenfläche abgewandten Ende, unter das andere zweite Verkleidungselement, so dass ein Überlappungsbereich entsteht, in welchem das zweite Verkleidungselement (bezogen auf eine Blickrichtung von außen auf das Fahrzeug) über dem Übergangsabschnitt beziehungsweise der Übergangsabschnitt unter dem zweiten Verkleidungselement angeordnet ist.

Aufgrund der Parallelität des Übergangsabschnitts, der sich unter dem ersten Winkel von dem restlichen ersten Verkleidungselement weg erstreckt, und der an dem zweiten Verkleidungselement vorgesehenen Fase, wird eine Fuge erzeugt, die zumindest in diesem Bereich unter gleichem Winkel ausgerichtet ist. Diese Anordnung bietet den Vorteil, dass diese Fuge von außen nicht vollständig einsehbar ist. Dies ist derart zu verstehen, dass bei einem Blick senkrecht auf die Außenflächen nicht auf den Grund der Fuge oder durch die gesamte Fuge hindurch geblickt werden kann. Stattdessen ist lediglich ein Teil des um den ersten Winkel angestellten Übergangsabschnitts zu erkennen.

Dies ermöglicht, dass aufgrund der beschriebenen Parallelität zwischen Übergangsabschnitt und Fase ein einfacher Positionsausgleich der beiden Verkleidungselemente relativ zueinander unternommen werden kann, indem diese beispielsweise gegeneinander und/oder in der Höhe zueinander verschoben werden, um eventuelle Toleranzen auszugleichen, ohne dass sich die Fuge in ihrer Ausrichtung selbst verändert. Diese Anordnung bietet sogar die Möglichkeit, dass im Falle einer die Parallelität von Übergangsabschnitt und Fase erhaltenden gegenseitigen Verschiebung der Verkleidungselemente die Geometrie der Fuge, insbesondere das Spaltmaß, erhalten bleibt.

In jedem Fall bleibt die Fuge weiterhin nicht einsehbar. Zusätzlich werden aufgrund der nicht einsehbaren, schräg verlaufenden Fuge aeroakustische und aerodynamische Einflüsse verringert, da eine Strömung je nach Strömungsrichtung und Breite der Fuge leichter in die Fuge einströmen oder über diese hinwegströmen kann.

Des Weiteren kann das zweite Verkleidungselement im Bereich des zweiten Endes und außerhalb der Fase eine Wandstärke d aufweisen, wobei das zweite Ende des zweiten Verkleidungselements und das erste Ende des Übergangsabschnitt überlappend miteinander ausgebildet sind und eine Überlappungslänge mindestens d/2 beträgt.

Dies bedeutet, dass sich das zweite Verkleidungselement und der Übergangsabschnitt mit dem ersten und dem zweiten Ende derart überlappen, dass ein hierdurch gebildeter Überlappungsbereich die Überlappungslänge I von mindestens der halben Wandstärke des zweiten Verkleidungselements, also d/2, aufweist. Dieses Mindestmaß stellt sicher, dass die genannten Eigenschaften der erzeugten Fuge in besonders vorteilhaftem Maße bereitgestellt werden können. Als Wandstärke d ist dabei eine Wandstärke des zweiten Verkleidungselements an dem zweiten Ende ohne Beachtung der durch die dortige Fase erzeugten Verjüngung der Wandstärke zu verstehen.

Gemäß weiterer Ausführungsformen kann die zweite Außenfläche in Verlängerung zu der ersten Außenfläche oder parallel versetzt zu dieser angeordnet sein.

Dies bedeutet, dass die erste und zweite Außenfläche derart nebeneinander angeordnet sind, dass sie jeweils die Verlängerung der anderen Außenfläche darstellen und somit eine gemeinsame und durchgängige äußere Oberfläche definieren, die lediglich durch die zwischen beiden Verkleidungselementen erzeugte Fuge voneinander getrennt sind. Hierbei können die Außenflächen zum Beispiel eben ausgeführt sein, um eine gemeinsame ebene Oberfläche zu bilden. Gemäß eines alternativen Ausführungsbeispiels können die beiden Außenflächen aber jeweils auch gekrümmt ausgeführt sein und eine gemeinsame gekrümmte Oberfläche bilden.

Die alternative parallele Beabstandung ist derart zu verstehen, dass die zweite Außenfläche selbst nicht die Verlängerung der ersten Außenfläche darstellt, sondern parallel zu deren (gedachter) Verlängerung und somit parallel aber versetzt zu der ersten Außenfläche angeordnet ist. Folglich wird eine Stufe zwischen der ersten Außenfläche und der zweiten Außenfläche erzeugt. Auch in diesem Fall ist beispielsweise eine ebene oder eine gekrümmte Ausführung der Außenflächen, wie voranstehend beschrieben, möglich.

Des Weiteren kann der Übergangsabschnitt mit der ersten Außenfläche einen ersten Winkel zwischen 130° ≤ α ≤ 170°, vorzugsweise zwischen 140° ≤ α ≤ 160°, einschließen. Der erste Winkel ist demnach als der jeweils betragsmäßig kleinere Winkel zwischen der ersten Außenfläche und dem hierzu abgewinkelten Übergangsabschnitt zu verstehen. Mit den genannten Wertebereichen ist eine besonders vorteilhaft ausgebildete Ausgestaltung der erzeugten Fuge zu beobachten, die zudem die strömungsbedingten Störeinflüsse minimiert.

Optional kann an dem ersten Ende des Übergangsabschnitt ein Flächenabschnitt ausgebildet sein, welcher um einen zweiten Winkel abgewinkelt zu dem Übergangsabschnitt angeordnet ist.

Dieser Flächenabschnitt ist als zusätzliche Verlängerung des Übergangsabschnitts zu verstehen, der an dem ersten Ende des Übergangsabschnitts anschließt und sich unter dem zweiten Verkleidungselement fortsetzen kann, um beispielsweise eine verbesserte Versteifung des ersten Verkleidungselementes zu bewirken.

Zum Beispiel kann der Flächenabschnitt mit dem Übergangsabschnitt einen zweiten Winkel zwischen 130° ≤ β ≤ 170°, vorzugsweise zwischen 140° ≤ β ≤ 160° einschließen. Der zweite Winkel ist demnach als der jeweils betragsmäßig kleinere Winkel zwischen dem Übergangsabschnitt und dem hierzu abgewinkelten Flächenabschnitt zu verstehen.

Vorzugsweise ist der zweite Winkel derart gewählt, dass die Abwinklung in entgegengesetzter Richtung zu der (ersten) Abwinklung des Übergangsabschnitts ausgerichtet ist und diese (erste) Abwinklung somit zumindest teilweise reduziert. Insbesondere kann der Flächenabschnitt im Wesentlichen einen parallel zu einer gedanklichen Verlängerung der ersten Außenfläche ausgebildeten Verlauf aufweisen.

Des Weiteren ist es möglich, dass der Übergangsabschnitt und/oder der Flächenabschnitt einstückig mit dem ersten Verkleidungselement ausgeführt sind.

Die beschriebene Verkleidungsanordnung ist grundsätzlich für alle Arten von Kraftfahrzeugen geeignet. Hierzu sind insbesondere Einspur- oder Zweispurfahrzeuge, wie beispielsweise Personenkraftwagen, Lastkraftwagen, Motorräder oder motorradähnliche Fahrzeuge, wie Scooter, zwei-, drei- oder vierrädrige Roller, Trikes sowie Quads, zu verstehen.

Die Erfindung wird nachfolgend anhand zweier Ausführungsbeispiele unter Bezugnahme auf die Zeichnungen näher erläutert. Es zeigen:
Fig. 1 eine erste Ausführungsform einer Verkleidungsanordnung gemäß der Beschreibung, und
Fig. 2 eine zweite Ausführungsform der Verkleidungsanordnung gemäß der Beschreibung.

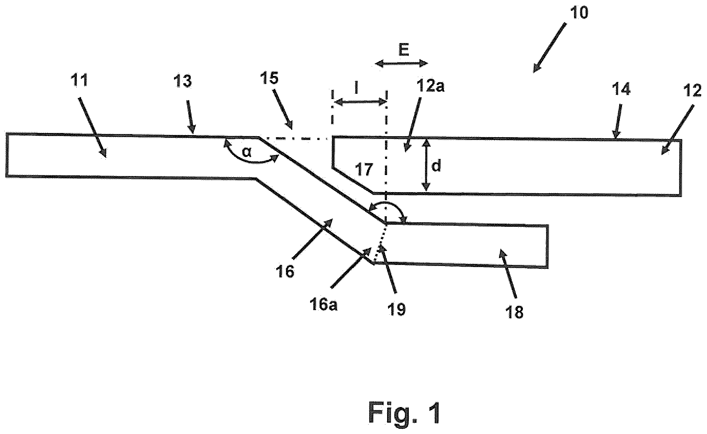

In Fig. 1 ist eine erste Ausführungsform einer Verkleidungsanordnung 10 in schematischer, nicht-maßstäblicher Darstellung abgebildet. Die Verkleidungsanordnung 10 kann beispielsweise eine Verkleidungsanordnung eines Kraftfahrzeugs (nicht dargestellt), insbesondere eines Motorrads oder eines motorradähnlichen Kraftfahrzeugs, sein. Lediglich teilweise dargestellt sind zwei flächige Verkleidungselemente 11,12, wobei ein erstes Verkleidungselement 11 eine erste Außenfläche 13 und das zweite Verkleidungselement 12 eine zweite Außenfläche 14 aufweisen, welche im verbauten Zustand einen Teil einer äußeren Verkleidung des Kraftfahrzeuges bilden. Hierzu sind die beiden Verkleidungselemente 11,12 nebeneinander angeordnet und durch eine Fuge 15 voneinander getrennt. Das erste Verkleidungselement 11 weist einen Übergangsabschnitt 16 auf, der um einen ersten Winkel α abgewinkelt zu der ersten Außenfläche 13 ausgebildet und mit einem ersten Ende 16a unter das zweite Verkleidungselement 12 erstreckt ist. Das zweite Verkleidungselement 12 weist an einem dem Übergangsabschnitt 16 zugewandten zweiten Ende 12a eine Fase 17 auf, die parallel zu dem Übergangsabschnitt 16 ausgebildet ist. Dies bedeutet, dass ein durch die Fase 17 gebildeter Oberflächenabschnitt des zweiten Verkleidungselements 12 und eine der Fase 17 zugewandte Oberfläche des Übergangsabschnitts 16 parallel zueinander ausgeführt sind.

Das zweite Verkleidungselement 12 weist im Bereich des zweiten Endes 12a und außerhalb der Fase 17 eine Wandstärke d auf, wobei das zweite Ende 12a des zweiten Verkleidungselements 12 und das erste Ende 16a des Übergangsabschnitts 16 überlappend miteinander ausgebildet sind und einen Überlappungsbereich mit einer Überlappungslänge I von mindestens d/2 definieren. Die Überlappungslänge I ist gemäß Fig. 1 von einer äußersten Spitze des zweiten Endes 12a bis einschließlich des ersten Endes 16a bemessen, auch für den Fall, dass das erste Ende 16a - wie ebenfalls in Fig. 1 dargestellt - mit dem nachfolgend näher beschriebenen Flächenabschnitt 18 verbunden ist.

In der dargestellten Ausführungsform ist die zweite Außenfläche 14 in Verlängerung zu der ersten Außenfläche 13 angeordnet. Alternativ, jedoch nicht dargestellt, ist eine parallel versetzte Beabstandung zu dieser ersten Außenfläche 13 möglich.

Vorzugsweise schließt der Übergangsabschnitt 16 mit der ersten Außenfläche 13 einen ersten Winkel α zwischen 130° ≤ α ≤ 170°, vorzugsweise zwischen 140°≤ α≤ 160°, ein.

Des Weiteren ist an dem ersten Ende 16a des Übergangsabschnitt 16 der bereits genannte zusätzliche Flächenabschnitt 18 ausgebildet, welcher um einen zweiten Winkel β abgewinkelt zu dem Übergangsabschnitt 16 angeordnet ist. Der Flächenabschnitt 18 schließt mit dem Übergangsabschnitt 16 den zweiten Winkel β zwischen 130° ≤ β ≤ 170°, vorzugsweise zwischen 140° ≤ β ≤ 160°, ein. Hierbei ist der zweite Winkel β derart gewählt, dass der Flächenabschnitt 18 im Wesentlichen einen parallel versetzt zu der ersten Außenfläche 13 und optional einen parallel versetzt zu der zweiten Außenfläche 14 ausgebildeten Verlauf aufweist. Dies bedeutet, dass der erste Winkel α betragsmäßig dem zweiten Winkel β entspricht, so dass sich die Abwinklungen des Übergangsabschnitts 16 gegenüber der ersten Außenfläche 13 und des Flächenabschnitts 18 gegenüber dem Übergangsabschnitt 16 aufheben.

Vorzugsweise können der Übergangsabschnitt 16 und der Flächenabschnitt 18 einstückig mit dem restlichen ersten Verkleidungselement 11 und somit auch miteinander ausbildet sein. Zum besseren Verständnis der einzelnen Abschnitte 16,18 ist lediglich schematisch und beispielhaft eine gedankliche Abgrenzung zwischen dem Übergangsabschnitt 16 und dem Flächenabschnitt 18 als gepunktete Linie 19 dargestellt.

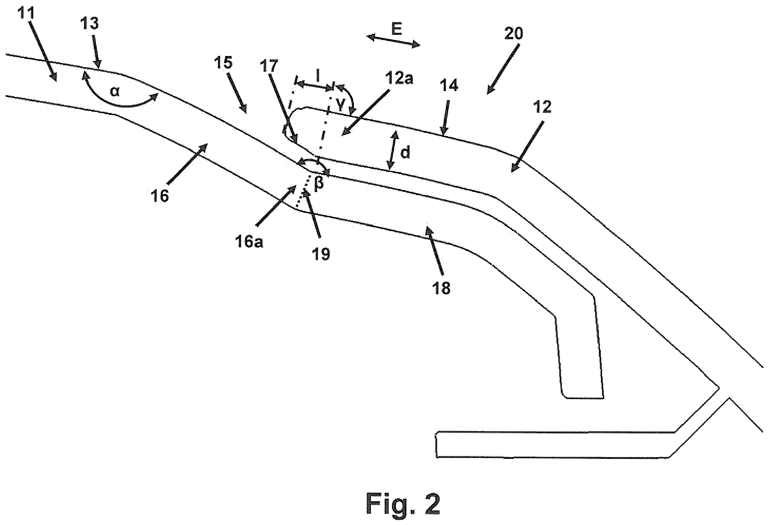

Fig. 2 zeigt eine zweite Ausführungsform der Verkleidungsanordnung 20 gemäß der Beschreibung. Diese ist im Wesentlichen vergleichbar zu der Verkleidungsanordnung 10 gemäß der in Fig. 1 dargestellten ersten Ausführungsform ausgestaltet, so dass auf die dort gegebene Beschreibung verwiesen werden kann und für vergleichbare Komponenten die identischen Bezugszeichen verwendet werden. Im Unterschied zu der ersten Ausführungsform sind jedoch die erste 13 und zweite Außenfläche 14 jeweils gekrümmt ausgestaltet.

Auch in dieser Ausführungsform ist die dem Übergangsabschnitt 16 zugewandte Fase 17 parallel zu dem Übergangsabschnitt 16 ausgebildet.

Die Wandstärke d des zweiten Verkleidungselements 12 ist ebenfalls im Bereich des zweiten Endes 12a und außerhalb der Fase 17 zu bestimmen, wobei das zweite Ende 12a des zweiten Verkleidungselements 12 und das erste Ende 16a des Übergangsabschnitt 16 in einem Überlappungsbereich überlappend miteinander ausgebildet sind und eine Überlappungslänge I mindestens d/2 beträgt. Die Grenzen des Überlappungsbereichs mit der Überlappungslänge I sind in der dargestellten Ausführungsform im Wesentlichen senkrecht (Winkel γ = ca. 90°) zu einer (lokalen) Erstreckungsrichtung E des zweiten Verkleidungselements 12 zu bestimmen. Die Erstreckungsrichtung E kann insbesondere identisch zu der Verlaufsrichtung der zweiten Außenfläche 14 sein.

Optional kann der Flächenabschnitt 18, wie in Fig. 2 dargestellt, einen ebenfalls gekrümmten und abgewinkelten Verlauf aufweisen und/oder als Flansch ausgebildet sein, um beispielswiese mit einem ebenfalls optionalen Verbindungsabschnitt des zweiten Verbindungselementes 12 form-, stoff- und/oder kraftschlüssig verbunden zu werden.

## Patentansprüche

1. Verkleidungsanordnung für ein Kraftfahrzeug, insbesondere für ein Motorrad oder ein motorradähnliches Kraftfahrzeug, mit mindestens zwei flächigen Verkleidungselementen (11,12), wobei ein erstes Verkleidungselement (11) eine erste Außenfläche (13) und das zweite Verkleidungselement (12) eine zweite Außenfläche (14) aufweisen, welche im verbauten Zustand zumindest einen Teil einer äußeren Verkleidung des Kraftfahrzeuges bilden und nebeneinander angeordnet sowie durch eine Fuge (15) voneinander getrennt sind,wobei das erste Verkleidungselement (11) einen Übergangsabschnitt (16) aufweist, der um einen ersten Winkel (α) abgewinkelt zu der ersten Außenfläche (13) ausgebildet und zumindest mit einem ersten Ende (16a) unter das zweite Verkleidungselement (12) erstreckt ist, wobei das zweite Verkleidungselement (12) an einem dem Übergangsabschnitt (16) zugewandten zweiten Ende (12a) eine Fase (17) aufweist, die parallel zu dem Übergangsabschnitt (16) ausgebildet ist,
**dadurch gekennzeichnet, dass**
das zweite Verkleidungselement (12) im Bereich des zweiten Endes (12a) und außerhalb der Fase (17) eine Wandstärke d aufweist, wobei das zweite Ende (12a) des zweiten Verkleidungselements (12) und das erste Ende (16a) des Übergangsabschnitts (16) überlappend miteinander ausgebildet sind und eine Überlappungslänge (I) mindestens d/2 beträgt.

2. Verkleidungsanordnung nach Anspruch 1, **dadurch gekennzeichnet, dass** die zweite Außenfläche (14) in Verlängerung zu der ersten Außenfläche (13) oder parallel versetzt zu dieser angeordnet ist.

3. Verkleidungsanordnung nach Anspruch 1 oder 2, **dadurch gekennzeichnet, dass** der erste Winkel (α) zwischen 130° ≤ α ≤ 170°, vorzugsweise zwischen 140° ≤ α ≤ 160°, gewählt ist.

4. Verkleidungsanordnung nach mindestens einem der Ansprüche 1 bis 3, **dadurch gekennzeichnet, dass** an dem ersten Ende (16a) des Übergangsabschnitt (16) ein Flächenabschnitt (18) ausgebildet ist, welcher um einen zweiten Winkel (β) abgewinkelt zu dem Übergangsabschnitt (16) angeordnet ist.

5. Verkleidungsanordnung nach Anspruch 4, **dadurch gekennzeichnet, dass** der zweite Winkel (β) zwischen 130° ≤ β ≤ 170°, vorzugsweise zwischen 140° ≤ β ≤ 160°, ausgewählt ist.

6. Verkleidungsanordnung nach mindestens einem der Ansprüche 4 bis 5, **dadurch gekennzeichnet, dass** der Flächenabschnitt (18) im Wesentlichen einen parallel zu der zweiten Außenfläche (14) ausgebildeten Verlauf aufweist.

7. Verkleidungsanordnung nach mindestens einem der Ansprüche 1 bis 6, **dadurch gekennzeichnet, dass** der Übergangsabschnitt (16) und/oder der Flächenabschnitt (18) einstückig mit dem ersten Verkleidungselement (11) ausgeführt sind.

## Claims

1. A fairing arrangement for a motor vehicle, in particular for a motorcycle or a motor vehicle similar to a motorcycle, with at least two sheet-like fairing elements (11, 12), wherein a first fairing element (11) has a first outer face (13) and the second fairing element (12) has a second outer face (14) which in the installed state form at least part of an outer fairing of the motor vehicle and are arranged next to one another and also are separated from each other by a gap (15), wherein the first fairing element (11) has a transition portion (16) which is formed angled by a first angle (α) relative to the first outer face (13) and is extended at least with a first end (16a) under the second fairing element (12), wherein the second fairing element (12) has on a second end (12a) which faces the transition portion (16) a chamfer (17) which is formed parallel to the transition portion (16),
**characterised in that**
the second fairing element (12) in the region of the second end (12a) and outside the chamfer (17) has a wall thickness d, the second end (12a) of the second fairing element (12) and the first end (16a) of the transition portion (16) being formed overlapping each other and an overlapping length (I) being at least d/2.

2. A fairing arrangement according to Claim 1, **characterised in that** the second outer face (14) is arranged in an extension to the first outer face (13) or offset parallel thereto.

3. A fairing arrangement according to Claim 1 or Claim 2, **characterised in that** the first angle (α) is selected to be between 130° ≤ α ≤ 170°, preferably between 140° ≤ α ≤ 160°.

4. A fairing arrangement according to at least one of Claims 1 to 3, **characterised in that** a surface portion (18) is formed on the first end (16a) of the transition portion (16), which surface portion is arranged angled by a second angle (β) relative to the transition portion (16).

5. A fairing arrangement according to Claim 4, **characterised in that** the second angle (β) is selected to be between 130° ≤ β ≤ 170°, preferably between 140° ≤ β ≤ 160°.

6. A fairing arrangement according to at least one of Claims 4 to 5, **characterised in that** the surface portion (18) has substantially a course formed parallel to the second outer face (14).

7. A fairing arrangement according to at least one of Claims 1 to 6, **characterised in that** the transition portion (16) and/or the surface portion (18) are embodied in one piece with the first fairing element (11).

## Revendications

1. Système de carénage destiné à un véhicule automobile en particulier à une moto ou un véhicule automobile similaire à une moto comportant deux éléments de carénage plat (11, 12), un premier élément de carénage (11) ayant une première surface externe (13) et le second élément de carénage (12) ayant une seconde surface externe (14) qui forment, à l'état monté, au moins une partie du carénage externe du véhicule automobile, et sont situés à proximité l'un de l'autre et séparés l'un de l'autre par une jointure (15), le premier élément de carénage (11) comportant un segment de transition (16) qui est coudé selon un premier angle (α) par rapport à la première surface externe (13) et s'étend au moins par une première extrémité (16a) au-dessous du second élément de carénage (12), le second élément de carénage (12) comportant, à une seconde extrémité (12a) tournée vers le segment de transition (16), un chanfrein (17) qui est réalisé parallèlement au segment de transition (16),
**caractérisé en ce que**
le second élément de carénage (12) a, dans la zone de la seconde extrémité (12a) et en dehors du chanfrein (17) une épaisseur de paroi de la seconde extrémité (12a) du second élément de carénage (12) et la première extrémité (16a) du segment de transition (16) se chevauchant et ayant une longueur de chevauchement (1) d'au moins d/2.

2. Dispositif de carénage conforme à la revendication 1,
**caractérisé en ce que**
la seconde surface externe (14) est située dans le prolongement de la première surface externe (13) ou est décalée parallèlement par rapport à celle-ci.

3. Dispositif de carénage conforme à la revendication 1 ou 2,
**caractérisé en ce que**
le premier angle (α) est situé entre 130° ≤ α ≤ 170°, de préférence entre 140°≤ α ≤ 160°.

4. Dispositif de carénage conforme à au moins l'une des revendications 1 à 3,
**caractérisé en ce que**
sur la première extrémité (16a) du segment de transition (16) est formé un segment plat (18) qui est coudé selon un second angle (β) par rapport au segment de transition (16).

5. Dispositif de carénage conforme à la revendication 4,
**caractérisé en ce que**
le second angle (β) est situé entre 130° ≤ β ≤ 170°, de préférence entre 140° ≤ β ≤ 160°.

6. Dispositif de carénage conforme à au moins l'une des revendications 1 à 5,
**caractérisé en ce que**
le segment plat (18) a un tracé essentiellement parallèle à la seconde surface externe (14).

7. Dispositif de carénage conforme à au moins l'une des revendications 1 à 6,
**caractérisé en ce que**
le segment de transition (16) et/ou le segment plat (18) est(sont) réalisé(s) en une seule pièce avec le premier élément de carénage (11).
